# EUROPEAN PATENT SPECIFICATION

(11) **EP 0 779 243 B1**
(45) Date of publication and mention of the grant of the patent: **07.06.2000**
(21) Application number: 96308308.4
(22) Date of filing: 18.11.1996
(51) Int. Cl.: C01G 23/08, C01G 23/053, C09C 1/36

(54) **Rutile titanium dioxide**
Rutil-Titandioxid
Dioxide de titane sous forme rutile

(30) Priority: 15.12.1995 GB 9525616
(43) Date of publication of application: 18.06.1997
(73) Proprietor: TIOXIDE GROUP SERVICES LIMITED, London W14 0QL (GB)
(72) Inventor: Robb, John, Stockton on Tees, Cleveland TS18 5EG (GB); Watson, Gary William, Guisborough, Cleveland TS14 7PE (GB)
(74) Representative: Jackson, John Derek

(56) References cited:
- FR-A- 1 573 954
- FR-A- 2 074 219
- GB-A- 990 419
- US-A- 2 427 165

## Description

This invention relates to rutile titanium dioxide and a method for its preparation. In particular the method is suitable for producing rutile titanium dioxide having narrow particle size and crystal size distributions.

It is well known that a principal factor affecting the opacity available from a rutile titanium dioxide pigment is the average crystal size of the pigment. For maximum optical efficiency it is also important that the distribution of crystal sizes is narrow and that the size distribution of particles (which comprise one or more crystals) is narrow. For titanium dioxide having optimised crystal size and crystal size distribution, the best efficiency is obtained when the pigment has a high single crystal fraction (i.e. the average particle size is close to the average crystal size).

It is an object of this invention to make available a process which can generate rutile titanium dioxide having narrow particle size and crystal size distributions and a high single crystal fraction.

As a general rule it is acknowledged that calcination of titanium oxide to a very high rutile content leads to sintering of individual crystals and hence a relatively wide particle size distribution and a relatively low single crystal fraction. Surprisingly, the process of the invention is capable of generating a novel product having narrow crystal and particle size distributions and a high single crystal fraction and, accordingly, a second aspect of the invention comprises rutile titanium dioxide having an average crystal size in the range 0.17 to 0.32 micrometre, a particle size distribution with a geometric weight standard deviation less than 1.25 and a ratio of average particle size to average crystal size of less than 1.25:1.

The process of the invention differs from conventional processes in utilising a form of hydrous titanium oxide which rutilises relatively easily. It is common practice to adjust calcination conditions (e.g. by the addition of rutilisation inhibitors to the calcination feed) such that the hydrous titanium oxide is relatively slowly converted to rutile titanium dioxide since this is generally beneficial for calciner control. Hydrous titanium oxide suitable for use in the process of this invention can be prepared in a number of ways, for example by adding rutile promoters to the calciner feed, reducing the normal amount of rutile inhibitor added to the calciner feed or using a relatively large amount of rutile-promoting nuclei (either during precipitation of the hydrous titanium oxide or by addition to the calciner). Rutilisation promoters which can be present during calcination include lithium and zinc compounds and rutilisation inhibitors, whose presence should be controlled include aluminium, potassium and phosphorus compounds.

The process of the invention comprises hydrolysing an aqueous solution of titanium sulphate in the presence of titanium dioxide nuclei in an amount of from 0.2 per cent to 4.0 per cent by weight calculated with respect to potential TiO₂ in the titanium sulphate solution to form hydrous titanium oxide and said hydrous titanium oxide is calcined by heating to a temperature in the range of 850°C to 930°C in the presence of a compound of sodium or a compound of lithium which is present in an amount between 0.05 per cent and 0.3 per cent by weight calculated as alkali metal oxide with respect to weight of hydrous titanium oxide calculated as TiO₂ and, optionally, in the presence of a compound of phosphorus which is present in an amount up to 0.25 per cent by weight calculated as P₂O₅ with respect to weight of hydrous titanium oxide calculated as TiO₂, no other calcination additive being deliberately added, said calcination being continued until titanium dioxide of which at least 99.5 per cent by weight is in the rutile crystal form is produced.

A variation on this preferred process comprises the further addition of a compound of aluminium to the hydrous titanium oxide before calcination. However, it is important that the amount of aluminium compound added is strictly controlled and is related to the presence of niobium in the hydrous titanium oxide. Niobium compounds are frequently present in feedstocks used to prepare the titanium oxide and their presence generally causes discolouration of the finished rutile titanium dioxide. This discolouration is minimised by adding sufficient aluminium compound to ensure that at least approximately equimolar amounts of aluminium and niobium are present. Usually an amount slightly in excess of an equimolar quantity is added in order to ensure at least equimolar quantities when the niobium content varies due to production variations. Typically, the amount of aluminium compound added is about 55 per cent by weight calculated as Al₂O₃ of the weight of niobium present calculated as Nb₂O₅. Some variation is possible but the amount of aluminium compound added should normally be between 52 and 62 per cent by weight (as Al₂O₃) with respect to weight of niobium (as Nb₂O₅).

A variation on this further preferred process comprises the addition of a compound of aluminium to the hydrous titanium oxide before calcination. As hereinbefore described the aluminium is added with the intention of minimising the effect of niobium impurity in the titanium oxide. The amount of aluminium compound added is therefore between 52 and 62 per cent by weight (as Al₂O₃₎) with respect to weight of niobium present (as Nb₂O₅) as hereinbefore described.

In the above mentioned preferred embodiments the hydrous titanium oxide is precipitated in the presence of titanium dioxide nuclei. Such nuclei and their method of production are well known in the titanium dioxide industry. Normally, nuclei will be rutile-promoting nuclei and such nuclei are typically prepared by rapidly adding an aqueous solution of titanium tetrachloride containing the equivalent of about 200 grams per litre TiO₂ to a solution of sodium hydroxide in water.

The nuclei are present in an amount between 0.2 per cent and 4.0 per cent by weight calculated as TiO₂ based on weight of potential TiO₂ in the titanium sulphate solution. Preferably the amount of nuclei is from 1.0 per cent to 2.0 per cent by weight with respect to potential TiO₂.

The precipitated hydrous titanium oxide is separated from the residual titanium sulphate solution, typically by filtration, to produce what is normally described as 'pulp'. The pulp is generally washed to remove soluble iron salts and reduce sulphuric acid contamination, frequently by reslurrying with water and filtering again.

In one preferred process one or more compounds of lithium or sodium are present during the calcination of the hydrous titanium oxide. Normally, it will be necessary to add these compounds before calcination commences. Generally, any lithium or sodium compounds such as chlorides, sulphates or hydroxides can be used but the preferred compounds are lithium and sodium carbonate.

In the embodiment using lithium or sodium the amount of lithium or sodium compound present is from 0.05 per cent to 0.3 per cent by weight calculated as Li₂O or Na₂O with respect to hydrous titanium oxide calculated as TiO₂. For lithium compounds, the preferred amount is from 0.05 per cent to 0.15 per cent Li₂O by weight with respect to TiO₂ and, for sodium, the preferred amount is from 0.10 per cent to 0.20 per cent Na₂O with respect to TiO₂.

In the preferred embodiments, a compound of phosphorus is optionally present during the calcination. Frequently, phosphorus compounds are present in the hydrous titanium oxide due to the presence of phosphorus impurities in the ore used. However, it is commonly necessary to adjust the amount of phosphorus present by the addition of a phosphorus compound. Suitable compounds include phosphoric acid or, preferably, an ammonium phosphate.

When sodium or lithium is used as a calciner additive, the amount of phosphorus compound present, if used, is up to 0.25 per cent by weight calculated as P₂O₅ with respect to hydrous titanium oxide calculated as TiO₂ by weight. Preferably a phosphorus compound is present in an amount equivalent to 0.05 per cent to 0.25 per cent P₂O₅ with respect to TiO₂. When used in conjunction with a lithium compound, the preferred amount of phosphorus compound is from 0.10 per cent to 0.20 per cent by weight calculated as P₂O₅ with respect to TiO₂ and, when used with a sodium compound, the preferred amount is up to 0.15 per cent by weight calculated as P₂O₅ with respect to TiO₂.

When a potassium compound is used as a calciner additive, the amount of phosphorus compound present, if used, is up to 0.15 per cent by weight calculated as P₂O₅ with respect to hydrous titanium oxide calculated as TiO₂. Preferably the amount of phosphorus present is in the range 0.05 to 0.15 per cent by weight calculated as P₂O₅ with respect to titanium oxide calculated as TiO₂.

As mentioned hereinbefore a portion of an aluminium compound is added in carrying out a variation of either of the preferred processes of the invention. It is important that the amount of aluminium compound added is closely related to the amount of niobium present in the 'pulp' as hereinbefore described and the actual amount used will be determined by analysing the 'pulp' or the feedstock ore for niobium. Usually not more than 0.15 per cent by weight aluminium compound calculated as Al₂O₃ with respect to titanium oxide calculated as TiO₂ will be present. The aluminium compound used may be one of several aluminium compounds including aluminium chloride, hydroxide or nitrate but preferably aluminium sulphate is used.

In the process of the invention the hydrous titanium oxide is calcined by any conventional techniques known in the art. The essential feature of the calcination is that conditions are established which ensure that the titanium dioxide produced contains at least 99.5 per cent in the rutile crystal form. Preferably, conditions are established so that at least 99.8 per cent of the titanium dioxide produced is in the rutile crystal form. A useful product is obtained by calcining the titanium oxide to the point where it contains 99.9 per cent by weight rutile titanium dioxide and subsequently raising the temperature of the titanium oxide by a further 30 to 70 degrees centigrade. This product has a narrow particle size distribution as hereinbefore discussed and also has the useful property of having crystals which are more spherical and less angular than titanium dioxide prepared by conventional processes.

In the preferred embodiments of the invention described hereinbefore, the required conversion to rutile can be typically achieved by heating the hydrous titanium oxide to a temperature in the range 860°C to 930°C.

The product of the invention has been found to possess narrow crystal size and particle size distributions. Normally, however, the material discharged from the calciner will require milling in order to optimise the particle size distribution and to reduce particle size and increase the single crystal fraction of the titanium dioxide powder. Any suitable milling process can be used and several are known to persons skilled in this art. Preferably, however, a sand mill is used in which a dispersion of the titanium dioxide in water is prepared and said dispersion is mixed with sand particles in a milling zone where it is agitated by, for example, a series of discs mounted upon a rotating shaft. The sand particles act as a grinding medium and reduce the average particle size of the titanium dioxide.

In order to produce the novel product which is one aspect of this invention milling conditions are established which generate a product in which the ratio of average particle size to average crystal size is less than 1.25:1. Preferably, the conditions which are established ensure that this ratio is less than 1.1:1.

Typically, the average particle size is measured by X-ray sedimentation (e.g. by a Brookhaven BIXDC Particle Size Analyser) and the average crystal size is determined by transmission electron microscopy on a rubbed out sample with image analysis of the resulting photograph (e.g. using a Quantimet 570 Image Analyser).

Normally, the milled titanium dioxide has an average particle size, as determined by X-ray sedimentation, of less than 0.40 micrometre. Preferably the average size is less than 0.35 micrometre and, more preferably, less than 0.30 micrometre.

Usually, the average crystal size of the product of the process of the invention is in the range 0.17 micrometre to 0.32 micrometre and, preferably, products have an average crystal size in the range 0.22 micrometre to 0.30 micrometre. Frequently, the average crystal size is adjusted to suit the intended use of the titanium dioxide. For example, when the titanium dioxide is used in inks, it preferably has an average crystal size in the range 0.23 micrometre to 0.30 micrometre and, when used in paints, the preferred product has an average crystal size in the range 0.22 micrometre to 0.26 micrometre.

The titanium dioxide pigment particles are normally subsequently treated with the surface treatments common in this industry. For example, the particles are normally coated with an inorganic hydrous oxide or a phosphate. Typical oxides are oxides of silicon, titanium, zirconium and aluminium. Frequently, the surface of the particles is also treated with an organic compound such as a polyol or an alkanolamine. Typical organic compounds used are trimethylolpropane, pentaerythritol, triethanolamine and trimethylolethane.

Conveniently, the dispersion which is a product from a sand mill is used for treatment with one or more inorganic compounds after which the pigment is separated, dried and, if necessary, micronised.

As already stated hereinbefore, the invention is capable of generating a novel titanium dioxide in which the geometric weight standard deviation of the particle size as determined using a Brookhaven BIXDC Particle Size Analyser is less than 1.25. In preferred products of the invention the geometric weight standard deviation of particle size is less than 1.22.

Normally, the geometric weight standard deviation of crystal size of the novel titanium dioxide is less than 1.28.

The ratio of average particle size to average crystal size in this product of the invention is less than 1.25:1 and, preferably, is less than 1.1:1

Despite the fact that in the process of the invention the titanium dioxide is calcined to a higher rutile content than is conventionally thought to be desirable, no adverse optical effects are observed. In addition products made using the process of the preferred embodiments have been shown to have an exceptionally low abrasivity.

The invention is illustrated by the following examples.

### EXAMPLE 1

A titanium sulphate solution was prepared by digesting a slag feedstock with sulphuric acid, dissolving the resultant digestion cake with dilute sulphuric acid and clarifying the solution produced. The titanium sulphate solution had an acid/titanium ratio of 1.81, an iron/titanium ratio of 0.12 and a concentration equivalent to 240 grams TiO₂ per litre. The solution was heated to 85°C and titanium dioxide nuclei equivalent to 1.9% by weight TiO₂ with respect to weight of potential TiO₂ in the solution were added over 5 minutes. The temperature of the solution was held at 85°C for 2 hours after which it was raised to boiling point and held for 1 hour. Then the solution was diluted to 170 grams TiO₂ per litre and held at the boil for a further 15 minutes to form a slurry of hydrous titania.

This slurry was washed and leached and then mixed with monoammonium phosphate to produce the equivalent of 0.10% P₂O₅ with respect to TiO₂ in the slurry and with sodium carbonate equivalent to 0.19% Na₂O with respect to TiO₂. The resultant slurry was dried overnight at 110°C and passed through a 2 mm sieve. The powder produced was heated in a rotary calciner at a rate of 1°C per minute until the product was found to contain 99.9% rutile. This conversion was achieved at a temperature of 915°C.

The product was found to have an average crystal size of 0.26 micrometre and the geometric weight standard deviation of crystal size was 1.27 (by Quantimet 570 Image Analyser). The product was milled in a sand mill until the average particle size was 0.274 micrometre as determined by optical density. It was then coated with 2.6% alumina by conventional techniques involving precipitation from aluminium sulphate and sodium aluminate. After drying and grinding, the coated pigment was passed through a microniser twice during which it was treated with 0.60% trimethylolpropane prior to the first pass.

The final product had an average particle size (Brookhaven BIXDC) of 0.263 micrometre and an exceptionally narrow geometric weight particle size standard deviation of 1.20.

When incorporated in conventional manner into nitrocellulose inks the gloss of the inks was outstanding and the opacity was not compromised.

### EXAMPLE 2

A titanium sulphate solution was prepared in a similar manner to that used in Example 1 except that the feedstock was ilmenite. The solution had an acid/titanium ratio of 1.80, an iron/titanium ratio of 0.50 and a concentration equivalent to 202 grams TiO₂ per litre. A slurry of hydrous titania was produced by hydrolysis in a manner similar to that used in Example 1 except that the amount of titanium dioxide nuclei used was equivalent to 1.6% by weight TiO₂ with respect to weight of potential TiO₂ in the titanium sulphate solution.

The slurry was washed and leached and mixed with monoammonium phosphate to produce the equivalent of 0,10% P₂O₅ with respect to TiO₂ in the slurry and sodium carbonate equivalent to 0.22% Na₂O with respect to TiO₂. This treated slurry was heated in a rotary calciner at a ramp rate of 1°C per minute to a temperature of 950°C at which point the product was found to contain 99.9% rutile.

The product was found to have an average crystal size of 0.26 micrometre and the geometric weight standard deviation of crystal size was 1.26 (by Quantimet 570 Image Analyser). The product was coarsely dry milled and subsequently sand milled to an average particle size of 0.28 micrometre with a geometric particle size standard deviation of 1.45 (as measured by Optical Density Particle Size Analyser). It was then coated with 2.5 per cent by weight alumina by conventional techniques, dried and passed twice through a microniser.

The final product had an average particle size of 0.27 micrometre (Brookhaven BX1 particle size analyser). The particle size geometric standard deviation was 1.24.

When incorporated in conventional manner into nitrocellulose inks the inks had a high gloss with excellent opacity.

### EXAMPLE 3

A titanium sulphate solution was prepared in a similar manner to that used in Example 1. The solution had an acid/titanium ratio of 1.81, an iron/titanium ratio of 0.12 and a concentration equivalent to 240 grams TiO₂ per litre. A slurry of hydrous titania was produced by hydrolysis in a manner similar to that used in Example 1 except that the amount of titanium dioxide nuclei used was equivalent to 1.8% by weight TiO₂ with respect to weight of potential TiO₂ in the titanium sulphate solution.

The slurry was washed and leached and mixed with monoammonium phosphate to produce the equivalent of 0.12% P₂O₅ with respect to TiO₂ in the slurry and sodium carbonate equivalent to 0.20% Na₂O with respect to TiO₂ A sample of this treated slurry was heated in a rotary calciner at a ramp rate of 1°C per minute to a temperature of 950°C at which point the product was found to contain 99.9% rutile. The bulk of the slurry was heated in a rotary calciner at a ramp rate of 3°C per minute until the titanium dioxide was converted to 99.9% rutile.

The product was found to have an average crystal size of 0.24 micrometre and the geometric weight standard deviation of crystal size was 1.27 (by Quantimet 570 Image Analyser). The product was coarsely dry milled and subsequently sand milled to an average particle size of 0.30 micrometre with a geometric particle size standard deviation of 1.43 (as measured by Optical Density Particle Size Analyser). It was then coated with 2.5 per cent by weight alumina by conventional techniques, dried and passed twice through a microniser.

The final product had an average particle size of 0.30 micrometre (Brookhaven BX1 particle size analyser). The particle size geometric standard deviation was 1.24.

When incorporated in conventional manner into nitrocellulose inks the inks had a high gloss with excellent opacity.

### EXAMPLE 4 (lying outside the claimed invention)

A titanium sulphate solution was prepared in a similar manner to that used in Example 2. The solution had an acid/titanium ratio of 1.88 an iron/titanium ratio of 0.80 and a concentration equivalent to 170 grams TiO₂ per litre. A slurry of hydrous titania was produced by hydrolysis in a manner similar to that used in Example 1 except that the amount of titanium dioxide nuclei used was equivalent to 1.0% by weight TiO₂ with respect to weight of potential TiO₂ in the titanium sulphate solution.

The slurry was washed and leached and mixed with monoammonium phosphate to produce the equivalent of 0.10% P₂O₅ with respect to TiO₂ in the slurry, potassium carbonate equivalent to 0.22% K₂O with respect to TiO₂ and aluminium sulphate equivalent to 0.15% Al₂O₃ by weight with respect to TiO₂. (The niobium content of the slurry was 0.27% Nb₂O₅ by weight with respect to TiO₂). A sample of this treated slurry was heated in a rotary calciner at a ramp rate of 1°C per minute to a temperature of 950°C at which point the product was found to contain 99.4% rutile. The bulk of the slurry was heated in a rotary calciner at a ramp rate of 3°C until the product contain 99. 5% rutile.

The product was found to have an average crystal size of 0.26 micrometre and the geometric weight standard deviation of crystal size was 1.25 (by Quantimet 570 Image Analyser). The product was coarsely dry milled and subsequently sand milled to an average particle size of 0.34 micrometre with a geometric particle size standard deviation of 1.43 (as measured by Optical Density Particle Size Analyser). It was then coated with 0.1% by weight phosphate (as P₂O₅), 0.4% by weight titania, 0.5% by weight zirconia, 0.6% by weight silica and 3.3% by weight alumina by conventional technique, dried and passed twice through a microniser.

The final product had an average particle size of 0.31 micrometre (Brookhaven BX1 particle size analyser). The particle size geometric standard deviation was 1.22.

When incorporated in conventional manner into nitrocellulose alkyd paints the inks had a good gloss with high opacity.

### EXAMPLE 5

A titanium sulphate solution was prepared in a similar manner to that used in Example 1. The solution had an acid/titanium ratio of 1.81, an iron/titanium ratio of 0.12 and a concentration equivalent to 240 grams TiO₂ per litre. A slurry of hydrous titania was produced by hydrolysis in a manner similar to that used in Example 1 except that the amount of titanium dioxide nuclei used was equivalent to 3.5% by weight TiO₂ with respect to weight of potential TiO₂ in the titanium sulphate solution.

The slurry was washed and leached and mixed with monoammonium phosphate to produce the equivalent of 0.10% P₂O₅ with respect to TiO₂ in the slurry and sodium carbonate equivalent to 0.20% Na₂O with respect to TiO₂. This treated slurry was heated in a rotary calciner at a ramp rate of 1°C per minute to a temperature of 860°C at which point the product was found to contain 99.9% rutile. Heating was then continued until the temperature reached 900°C at which point calcination was stopped.

The product was found to have an average crystal size of 0.19 micrometre and the geometric weight standard deviation of crystal size was 1.25 (by Quantimet 570 Image Analyser). The mean aspect ratio of the product was 1.49. The product was coarsely dry milled and subsequently sand milled to an average particle size of 0.22 micrometre with a geometric particle size standard deviation of 1.39 (as measured by Optical Density Particle Size Analyser). It was then coated with 0.5 per cent by weight alumina by conventional technique, dried and passed through a microniser.

The product was found to have a high bulk density relative to conventional products, a property believed to be associated with the sphericity of the particles.

### EXAMPLE A (comparative)

This Example demonstrates that calcination to at least 99. 5% rutile is important to achieve the desired pigmentary properties.

A titanium sulphate solution was prepared in a similar manner to that used in Example 1. The solution had an acid/titanium ratio of 1.81, an iron/titanium ratio of 0.12 and a concentration equivalent to 240 grams TiO₂ per litre. A slurry of hydrous titania was produced by hydrolysis in a manner similar to that used in Example 1 except that the amount of titanium dioxide nuclei used was equivalent to 1.8% by weight TiO₂ with respect to weight of potential TiO₂ in the titanium sulphate solution.

The slurry was washed and leached and mixed with monoammonium phosphate to produce the equivalent of 0.11% P₂O₅ with respect to TiO₂ in the slurry and sodium carbonate equivalent to 0.18% Na₂O with respect to TiO₂. This treated slurry was heated in a rotary calciner at a ramp rate of 1°C per minute to a temperature of 950°C at which point the product was found to contain 99.9% rutile. The bulk of the slurry was calcined in a rotary calciner at a ramp rate of 3°C and heating was discontinued when the product contained 98.5% rutile.

The product was found to have an average crystal size of 0.21 micrometre and the geometric weight standard deviation of crystal size was 1.32 (by Quantimet 570 Image Analyser). The product was coarsely dry milled and subsequently sand milled to an average particle size of 0.29 micrometre with a geometric particle size standard deviation of 1.47 (as measured by Optical Density Particle Size Analyser). It was then coated with 2.5 per cent by weight alumina by conventional technique, dried and passed twice through a microniser.

The final product had an average particle size of 0.29 micrometre (Brookhaven BX1 particle size analyser). The particle size geometric standard deviation was 1.29.

When incorporated in conventional manner into nitrocellulose inks the inks had a normal gloss and opacity compared to conventional pigments.

## Claims

1. A process for the preparation of rutile titanium dioxide comprising hydrolysing an aqueous solution of titanium sulphate in the presence of titanium dioxide nuclei to form hydrous titanium oxide and subjecting said hydrous titanium oxide to calcination characterised in that an amount of from 0.2 per cent to 4.0 per cent by weight titanium dioxide nuclei calculated with respect to potential TiO₂ in the titanium sulphate solution is present during hydrolysis and said hydrous titanium oxide is calcined by heating to a temperature in the range 850°C to 930°C in the presence of a compound of sodium or a compound of lithium which is present in an amount between 0.05 per cent and 0.3 per cent by weight calculated as alkali metal oxide with respect to weight of hydrous titanium oxide calculated as TiO₂ and, optionally, in the presence of a compound of phosphorus which is present in an amount up to 0.25 per cent by weight calculated as P₂O₅ with respect to weight of hydrous titanium oxide calculated as TiO₂, no other calcination additive being deliberately added, said calcination being continued until titanium dioxide of which at least 99.5 per cent by weight is in the rutile crystal form is produced.

2. A process according to claim 1 characterised in that a compound of lithium is present during calcination in an amount in the range 0.05 per cent to 0.15 per cent by weight calculated as Li₂O with respect to weight of hydrous titanium oxide calculated as TiO₂.

3. A process according to claim 3 characterised in that a compound of sodium is present during calcination in an amount in the range 0.10 per cent to 0.20 per cent by weight calculated as Na₂O with respect to weight of hydrous titanium oxide calculated as TiO₂.

4. A process according to claim 1 or 2 characterised in that a compound of lithium and a compound of phosphorus are present during calcination, the phosphorus compound being present in an amount in the range 0.10 per cent to 0.20 per cent by weight calculated as P₂O₅ with respect to hydrous titanium oxide calculated as TiO₂.

5. A process according to claim 1 or 3 characterised in that a compound of sodium is present during calcination, and, optionally, a compound of phosphorus is present in an amount up to 0.15 per cent by weight calculated as P₂O₅ with respect to weight of hydrous titanium oxide calculated as TiO₂.

6. A process according to any one of claims 1 to 5 characterised in that a compound of aluminium is also present during calcination, in an amount which is at least approximately equimolar to the amount of any niobium present in the hydrous titanium oxide.

7. A process according to claim 6 characterised in that the compound of aluminium is present in an amount between 52 and 62 per cent by weight calculated as Al₂O₃ with respect to weight of niobium present calculated as Nb₂O₅.

8. A process according to claim 6 or 7 characterised in that the compound of aluminium is present in an amount up to 0.15 per cent by weight calculated as Al₂O₃ with respect to hydrous titanium oxide calculated as TiO₂.

9. A process according to any one of the preceding claims characterised in that the calcination is continued until a titanium dioxide is produced in which at least 99.9 per cent by weight is in the rutile crystal form and the temperature of the titanium dioxide is subsequently raised by a further 30 to 70 degrees Centigrade.

10. A process according to any one of the preceding claims characterised in that the material discharged from the calciner is subjected to a milling process until the ratio of average particle size to average crystal size is less than 1.25:1.

11. A process according to any one of the preceding claims characterised in that the material discharged from the calciner is subjected to a milling process in which the average particle size as measured by X-ray sedimentation is reduced to less than 0.40 micrometre.

12. A process according to any one of the preceding claims characterised in that the titanium dioxide is coated after calcination with an inorganic hydrous oxide, a phosphate or an organic compound.

13. Rutile titanium dioxide having an average crystal size in the range 0.17 to 0.32 micrometre characterised in that said rutile titanium dioxide has a particle size distribution with a geometric weight standard deviation less than 1.25 and a ratio of average particle size to average crystal size less than 1.25:1.

14. Rutile titanium dioxide according to claim 13 characterised in that the rutile titanium dioxide has a geometric weight standard deviation of crystal size less than 1.28.

15. Rutile titanium dioxide according to claim 13 or 14 characterised in that the rutile titanium dioxide has a ratio of average particle size to average crystal size less than 1.1:1.

## Patentansprüche

1. Verfahren zur Herstellung von Rutiltitandioxid, umfassend die Hydrolyse einer wäßrigen Lösung von Titansulfat in Gegenwart von Titandioxid-Kristallisationskeimen, um ein wasserhaltiges Titanoxid zu bilden, und Calcinieren des wasserhaltigen Titanoxids, dadurch gekennzeichnet, daß eine Menge von 0,2 Gew.-% bis 4,0 Gew.-% Titandioxid-Kristallisationskeimen, berechnet bezogen auf potentielles TiO₂ in der Titansulfatlösung, während der Hydrolyse vorliegt, und das wasserhaltige Titanoxid durch Erwärmen auf eine Temperatur im Bereich von 850 °C bis 930 °C in Gegenwart einer Natriumverbindung oder einer Lithiumverbindung, welche in einer Menge zwischen 0,05 Gew.-% und 0,3 Gew.-%, berechnet als Alkalimetalloxid bezogen auf das Gewicht des wasserhaltigen Titanoxids, berechnet als TiO₂ vorliegt und gegebenenfalls in Gegenwart einer Phosphorverbindung, welche in einer Menge von bis zu 0,25 Gew.-%, berechnet als P₂O₅, bezogen auf das Gewicht des wasserhaltigen Titanoxids, berechnet als TiO₂ vorliegt, calciniert wird, worin kein anderes Calcinierungsadditiv absichtlich zugegeben wird, wobei die Calcinierung fortgesetzt wird, bis ein Titandioxid hergestellt wird, von dem mindestens 99,5 Gew.-% in der Rutilkristallform vorliegen.

2. Verfahren nach Anspruch 1, dadurch gekennzeichnet, daß eine Lithiumverbindung während der Calcinierung in einer Menge im Bereich von 0,05 Gew.-% bis 0,15 Gew.-%, berechnet als Li₂O bezogen auf das Gewicht des wasserhaltigen Titanoxids, berechnet als TiO₂ vorliegt.

3. Verfahren nach Anspruch 1, dadurch gekennzeichnet, daß eine Natriumverbindung während der Calcinierung in einer Menge im Bereich von 0,10 Gew.-% bis 0,20 Gew.-%, berechnet als Na₂O, bezogen auf das Gewicht des wasserhaltigen Titanoxids, berechnet als TiO₂ vorliegt.

4. Verfahren nach Anspruch 1 oder 2, dadurch gekennzeichnet, daß eine Lithiumverbindung und eine Phosphorverbindung während der Calcinierung vorliegen, wobei die Phosphorverbindung in einer Menge im Bereich von 0,10 Gew.-% bis 0,20 Gew.%, berechnet als P₂O₅, bezogen auf das wasserhaltigen Titanoxid, berechnet als TiO₂ vorliegt.

5. Verfahren nach Anspruch 1 oder 3, dadurch gekennzeichnet, daß eine Natriumverbindung während der Calcinierung vorliegt und gegebenenfalls eine Phosphorverbindung in einer Menge von bis zu 0,15 Gew.-%, berechnet als P₂O₅, bezogen auf das Gewicht des wasserhaltigen Titanoxids, berechnet als TiO₂ vorliegt.

6. Verfahren nach einem der Ansprüche 1 bis 5, dadurch gekennzeichnet, daß eine Aluminiumverbindung ebenfalls während der Calcinierung in einer Menge vorliegt, die mindestens etwa äquimolar zu der Menge von jeglichem in dem wasserfreien Titanoxid vorliegenden Niob ist.

7. Verfahren nach Anspruch 6, dadurch gekennzeichnet, daß die Aluminiumverbindung in einer Menge zwischen 52 und 62 Gew.-%, berechnet als Al₂O₃, bezogen auf das Gewicht von vorliegendem Niob, berechnet als Nb₂O₅ vorliegt.

8. Verfahren nach Anspruch 6 oder 7, dadurch gekennzeichnet, daß die Aluminiumverbindung in einer Menge von bis zu 0,15 Gew.-%, berechnet als Al₂O₃, bezogen auf das wasserfreie Titanoxid, berechnet als TiO₂ vorliegt.

9. Verfahren nach einem der vorhergehenden Ansprüche, dadurch gekennzeichnet, daß die Calcinierung fortgesetzt wird, bis ein Titanoxid hergestellt ist, in dem mindestens 99,9 Gew.-% in der Rutilkristallform vorliegen und die Temperatur des Titandioxids anschließend um weitere 30 bis 70 °C erhöht wird.

10. Verfahren nach einem der vorhergehenden Ansprüche, dadurch gekennzeichnet, daß das aus dem Calcinierofen entnommene Material einem Zerkleinerungsverfahren unterzogen wird, bis das Verhältnis von mittlerer Teilchengröße zu mittlerer Kristallgröße kleiner als 1,25:1 ist.

11. Verfahren nach einem der vorhergehenden Ansprüche, dadurch gekennzeichnet, daß das aus dem Calcinierofen entnommene Material einem Zerkleinerungsverfahren unterzogen wird, in dem die mittlere Teilchengröße, wie durch Röntgenstrahlsedimentation gemessen, auf kleiner als 0,40 Mikrometer verringert wird.

12. Verfahren nach einem der vorhergehenden Ansprüche, dadurch gekennzeichnet, daß das Titandioxid nach einer Calcinierung mit einem anorganischen wasserhaltigen Oxid, einem Phosphat oder einer organischen Verbindung beschichtet wird.

13. Rutiltitandioxid mit einer mittleren Kristallgröße im Bereich von 0,17 bis 0,32 Mikrometer, dadurch gekennzeichnet, daß das Rutiltitandioxid eine Teilchengrößenverteilung mit einer geometrischen Gewichtsstandardabweichung von kleiner als 1,25 und ein Verhältnis von mittlerer Teilchengröße zu mittlerer Kristallgröße von kleiner als 1,25:1 aufweist.

14. Rutiltitandioxid nach Anspruch 13, dadurch gekennzeichnet, daß das Rutiltitandioxid eine geometrische Gewichtsstandardabweichung der Kristallgröße von kleiner als 1,28 aufweist.

15. Rutiltitandioxid nach Anspruch 13 oder 14, dadurch gekennzeichnet, daß das Rutiltitandioxid ein Verhältnis von mittlerer Teilchengröße zu mittlerer Kristallgröße von kleiner als 1,1:1 aufweist.

## Revendications

1. Procédé de préparation de dioxyde de titane de type rutile comprenant l'hydrolyse d'une solution aqueuse de sulfate de titane en présence de noyaux de dioxyde de titane pour former de l'oxyde de titane hydraté et la soumission dudit oxyde de titane hydraté à une calcination, caractérisé en ce qu'une quantité de 0,2 % à 4,0 % en masse de noyaux de dioxyde de titane calculée par rapport au TiO₂ potentiel dans la solution de sulfate de titane est présente pendant l'hydrolyse et ledit oxyde de titane hydraté est calciné par chauffage à une température située dans le domaine de 850 °C à 930 °C en présence d'un composé du sodium ou d'un composé du lithium qui est présent en une quantité située entre 0,05 % et 0,3 % en masse calculée en oxyde de métal alcalin par rapport à la masse d'oxyde de titane hydraté calculée en TiO₂ et, éventuellement, en présence d'un composé du phosphore qui est présent en une quantité pouvant atteindre 0,25 % en masse calculée en P₂O₅ par rapport à la masse de l'oxyde de titane hydraté calculée en TiO₂, aucun autre additif de calcination n'étant ajouté délibérément, ladite calcination étant continuée jusqu'à ce qu'il se produise du dioxyde de titane dont au moins 99,5 % en masse sont sous la forme cristalline du rutile.

2. Procédé selon la revendication 1, caractérisé en ce qu'un composé du lithium est présent pendant la calcination en une quantité située dans le domaine de 0,05 % à 0,15 % en masse calculée en LiO₂ par rapport à la masse d'oxyde de titane hydraté calculée en TiO₂.

3. Procédé selon la revendication 1, caractérisé en ce qu'un composé du sodium est présent pendant la calcination en une quantité située dans le domaine de 0,10 % à 0,20 % en masse calculée en Na₂O par rapport à la masse d'oxyde de titane hydraté calculée en TiO₂.

4. Procédé selon la revendication 1 ou 2, caractérisé en ce qu'un composé du lithium et un composé du phosphore sont présents pendant la calcination, le composé du phosphore étant présent en une quantité située dans le domaine de 0,10 % à 0,20 % en masse calculée en P₂O₅ par rapport à la masse d'oxyde de titane hydraté calculée en TiO₂.

5. Procédé selon la revendication 1 ou 3, caractérisé en ce qu'un composé du sodium est présent pendant la calcination et, éventuellement, un composé du phosphore est présent en une quantité pouvant atteindre 0,15 % en masse calculée en P₂O₅ par rapport à la masse d'oxyde de titane hydraté calculée en TiO₂.

6. Procédé selon l'une quelconque des revendications 1 à 5, caractérisé en ce qu'un composé de l'aluminium est présent aussi pendant la calcination, en une quantité qui est au moins approximativement équimolaire par rapport à la quantité de tout niobium présent dans l'oxyde de titane hydraté.

7. Procédé selon la revendication 6, caractérisé en ce que le composé de l'aluminium est présent en une quantité située entre 52 et 62 % en masse calculée en Al₂O₃ par rapport à la masse de niobium présent calculée en Nb₂O₅.

8. Procédé selon la revendication 6 ou 7, caractérisé en ce que le composé de l'aluminium est présent en une quantité pouvant atteindre 0,15 % en masse calculée en Al₂O₃ par rapport à la quantité d'oxyde de titane hydraté calculée en TiO₂.

9. Procédé selon l'une quelconque des revendications précédentes, caractérisé en ce que la calcination est continuée jusqu'à ce qu'il se produise un dioxyde de titane dans lequel au moins 99,9 % en masse sont sous la forme cristalline du rutile et la température du dioxyde de titane est ensuite augmentée de 30 à 70 °C supplémentaires.

10. Procédé selon l'une quelconque des revendications précédentes, caractérisé en ce que le matériau retiré du four de calcination est soumis à un procédé de broyage jusqu'à ce que le rapport de la taille moyenne de particules à la taille cristalline moyenne soit inférieur à 1,25:1.

11. Procédé selon l'une quelconque des revendications précédentes, caractérisé en ce que le matériau retiré du four de calcination est soumis à un procédé de broyage dans lequel la taille moyenne de particules, mesurée par sédimentation aux rayons X, est réduite à moins de 0,40 micromètre.

12. Procédé selon l'une quelconque des revendications précédentes, caractérisé en ce que le dioxyde de titane est revêtu après la calcination d'un oxyde hydraté inorganique, d'un phosphate ou d'un composé organique.

13. Dioxyde de titane de type rutile ayant une taille cristalline moyenne située dans le domaine de 0,17 à 0,32 micromètre caractérisé en ce que ledit dioxyde de titane de type rutile a une distribution de la taille des particules avec un écart-type en masse géométrique inférieur à 1,25 et un rapport de la taille moyenne de particules à la taille cristalline moyenne inférieur à 1,25:1.

14. Dioxyde de titane de type rutile selon la revendication 13, caractérisé en ce que le dioxyde de titane de type rutile a un écart-type en masse géométrique de la taille cristalline inférieur à 1,28.

15. Dioxyde de titane de type rutile selon la revendication 13 ou 14, caractérisé en ce que le dioxyde de titane de type rutile a un rapport de la taille moyenne de particules à la taille cristalline moyenne inférieur à 1,1:1.
